# EUROPEAN PATENT APPLICATION

(11) **EP 1 845 645 A1**
(43) Date of publication of application: **17.10.2007**
(21) Application number: 06700926.6
(22) Date of filing: 11.01.2006
(51) Int. Cl.: H04J 11/00, H04B 7/26

(54) **BASE STATION APPARATUS, RADIO TRANSMISSION SYSTEM, RADIO BASE STATION PROGRAM, AND TIMING ESTIMATING METHOD**

(30) Priority: 11.01.2005 JP 2005003407
(71) Applicant: NEC Corporation, Minato-ku Tokyo 108-8001 (JP)
(72) Inventor: KOYANAGI, Kenji, , Tokyo, 1088001 (JP)
(74) Representative: Reeve, Nicholas Edward
(86) International application number: PCT/JP2006/300572
(87) International publication number: WO 2006/075770

(57) **Abstract**

A base station apparatus (100) has an FFT unit (102) which FFT transforms a base station GI deleted signal (S_{BGID}) obtained by removing a guard interval from a received signal and outputs a base station FFT signal (S_{BFF7}). A mobile station separating unit (103) separates the base station FTT signal (S_{BFFT}) in correspondence with mobile stations, based on a frequency channel signal (S_{BCH}) provided by a frequency channel signal generator (105) and indicating a correspondence relationship between identification numbers assigned to mobile stations and frequency channels. Delay profile estimation circuits (104-1) to (1 04-M) corresponding to the mobile stations each estimate a delay profile from the input mobile station separated signal (S_{BDMX}) and output delay profile estimation signals (SBDP(1)) to (SBDP (M)). The base station apparatus (100) thus estimates delay profiles independently for signals transmitted by a plurality of mobile stations and contained in the received signals received in one OFDM symbol time.

## Description

### TECHNICAL FIELD

The present invention relates to an OFDM (Orthogonal Frequency Division Multiplexing) type radio transmission system and a base station apparatus for use therein, and in particular relates to a timing estimation method for use in a base station receiving signals transmitted from a plurality of mobile stations to estimate signal processing timing for each of the mobile stations.

### BACKGROUND ART

In a conventional OFMD type radio transmission system, FFT processing start timing is detected by correlating a received signal with a signal delayed from the received signal by a unit symbol (see, for example, Japanese Laid-Open Patent Publication No. 2000-201131 (Document 1)).

In another conventional OFMD type radio transmission system, a received signal is separated into units of subcarriers, and correlation between the received signal and a known signal is found for each subcarrier to obtain a delay profile for each subcarrier (see, for example, Japanese Laid-Open Patent Publication No. 2003-174426 (Document 2).

Further, according to another conventional technique, a delay profile of a received signal is obtained within a predetermined period such as FFT window width (see, for example, Japanese Laid-Open Patent Publication No. 2004-289475 (Document 3)). It is believed that, according to this method, a delay profile is obtained for each time unit by partitioning a received signal into time units to find correlation with a known signal, in a same manner as in a multicarrier transmission system employing the CDMA scheme (see, for example, Japanese Laid-Open Patent Publication No. 2001-148641 (Document 4) or No. 2004-7353 (Document 5)).

### DISCLOSURE OF THE INVENTION

### Problems To Be Solved by The Invention

All the conventional OFDM type radio transmission systems are designed to receive a transmission signal transmitted from a single station, and not to simultaneously receive signals transmitted from a plurality of transmission stations (for example, mobile stations) at a reception station (for example, a base station). Therefore, when such conventional radio transmission system is used to simultaneously receive signals transmitted from a plurality of transmission stations at a single reception station to obtain delay profile thereof, the relation between the delay profile thus obtained and the signals transmitted from the transmission stations is unknown. In other words, the conventional radio transmission systems have a problem that delay profiles of signals transmitted from different transmission stations cannot be obtained independently.

As for the conventional radio transmission systems described in Documents 1 and 3, if any of the signals transmitted from a plurality of transmission stations are delayed in excess of a guard interval, inter-symbol interference generated thereby will affect estimation of delay profiles, resulting significant decrease in accuracy of the estimation.

It is therefore an object of the present invention to provide a base station apparatus which is capable of independently obtaining delay profiles of signals transmitted from a plurality of transmission stations based on received signals obtained by simultaneously receiving a plurality of transmission signals transmitted from the plurality of transmission stations at a reception station, and a radio transmission system employing such a base station apparatus.

It is another object of the present invention to provide a base station apparatus which is capable of obtaining delay profiles of signals transmitted from transmission stations without being affected by inter-symbol interference, and a radio transmission system employing such a base station apparatus.

### Means for Solving the Problems

In order to achieve the objects above, the present invention provides a base station apparatus capable of simultaneous communication with a plurality of mobile station by an OFDM method, including a separating unit for separating a received signal in correspondence with the plurality of mobile stations, and a plurality of delay profile estimation units for obtaining delay profiles of the respective signals separated by the separating unit.

The present invention also provides a radio transmission system composed of base stations using OFDM as a radio transmission method and mobile stations, in which M (M is a natural number) mobile stations at maximum per base station simultaneously perform communication in one OFDM symbol time, wherein each of the base stations includes: frequency channel allocating means for allocating an i-th frequency channel to be used for transmitting a pilot signal to an i-th (i = 1, 2,···, M) mobile station; and frequency channel signal transmitting means for transmitting an i-th frequency channel signal representing the i-th frequency channel to the i-th mobile station. The i-th mobile station includes: frequency channel identifying means for receiving the i-th frequency channel signal and identifying the i-th frequency channel to be used for transmitting the pilot signal; pilot signal multiplexing means for multiplexing a known pilot signal on the identified i-th frequency channel to generate an i-th pilot-multiplexed signal; and transmission signal generating means for inverse Fourier transforming the i-th pilot-multiplexed signal into a signal on a time axis, and adding a guard interval to the inverse Fourier transformed signal to generate an i-th transmission signal. The base station further includes: signal transformation means for deleting a guard interval from a received signal obtained by receiving the i-th transmission signal, and Fourier transforming the signal from which the guard interval has been deleted, to thereby generate a transformed signal on a frequency axis as a transformed signal; mobile station signal separating means for extracting from the transformed signal subcarrier components corresponding to the i-th frequency channel to thereby generate an i-th mobile station separated signal consisting only of the signal transmitted by the i-th mobile station; and delay profile generating means for generating an i-th delay profile from the i-th mobile station separated signal.

The delay profile generating means is composed of means for inverse Fourier transforming the i-th mobile station separated signal to generate the i-th delay profile. The delay profile generating means may be composed of means for averaging the i-th mobile station separated signal for each same subcarrier component to generate an i-th averaged signal having the first to N-th subcarrier components, and means for inverse Fourier transforming the i-th averaged signal to generate an i-th delay profiles on the assumption that the i-th frequency channel is composed of N/M (N is a multiple of M) subcarriers selected from N subcarriers consisting of a first to N-th subcarriers. Alternatively, the delay profile generating means may be composed of means for interpolating the subcarrier components between the subcarriers corresponding to the i-th frequency channel by using the i-th mobile station separated signal to thereby generate an i-th interpolation signal, and means for inverse Fourier transforming the i-th interpolation signal to generate an i-th delay profile. Further, the delay profile generating means may be composed of means for averaging the i-th mobile station separated signal for each same subcarrier component to generate an i-th averaged signal having the first to N-th subcarrier components, means for interpolating the subcarrier components between the subcarriers corresponding to the i-th frequency channel in the i-th averaged signal to thereby generate an i-th interpolation signal, and means for inverse Fourier transforming the i-th interpolation signal to generate an i-th delay profile.

As the frequency channel described above, a frequency channel is usable which is composed of a total of N/M successive subcarriers consisting of a {N/M*(j-1)+1}-th (j is a natural number equal to or less than M and corresponds with i in one-to-one relationship) to (N/M*j)-th subcarriers in one OFDM symbol composed of a total of N subcarriers consisting of a first to N-th subcarriers. A frequency channel is also usable, which is composed of a total of N/M subcarriers and located at a {j+M*(x-1)}-th (x = 1, 2, ..., N/M) (j is a natural number equal to or less than M and corresponds with i in one-to-one relationship, and x is 1, 2, ···, or N/M) position among the total of N subcarriers in one OFDM symbol. Alternatively, a total of N/M subcarriers are usable, which are randomly selected from among the total of N subcarriers in one OFDM symbol on the condition that they do not overlap with the subcarriers used by other frequency channels.

The present invention also provides a base station apparatus using OFDM as a radio transmission method to simultaneously communicate with a maximum of M (M is a natural number) mobile stations in one OFDM symbol time. The base station apparatus includes: frequency channel allocating means for allocating an i-th (i = 1, 2,···, M) frequency channel to be used for transmitting a pilot signal to an i-th mobile station; frequency channel signal transmitting means for transmitting an i-th frequency channel signal representing the i-th frequency channel to the i-th mobile station; signal transformation means for deleting a guard interval from a received signal obtained by receiving an i-th transmission signal transmitted by the i-th mobile station in response to the i-th frequency channel signal, and Fourier transforming the signal from which the guard interval has been deleted to thereby generate a signal transformed on a frequency axis as a transformed signal; mobile station signal separating means for extracting subcarrier components corresponding to the i-th frequency channel from the transformed signal to thereby generate an i-th mobile station separated signal consisting only of the signal transmitted by the i-th mobile station; and delay profile generating means for generating an i-th delay profile from the i-th mobile station separated signal.

Further, the present invention provides a base station apparatus program for use in a base station apparatus, which uses OFDM as a radio transmission method to simultaneously communicate with a maximum of M (M is a natural number) mobile stations in one OFDM symbol time. The program is characterized by causing the base station apparatus to execute: frequency channel allocating processing for allocating an i-th (i = 1, 2, ···, M) frequency channel to be used when transmitting a pilot signal to an i-th mobile station; frequency channel signal transmission processing for transmitting an i-th frequency channel signal indicating the i-th frequency channel to the i-th mobile station; signal transformation processing for deleting a guard interval from a received signal obtained by receiving an i-th transmission signal transmitted by the i-th mobile station in response to the i-th frequency channel signal, and Fourier transforming the signal from which the guard interval has been deleted to generate a signal transformed on a frequency axis as a transformed signal; mobile station signal separating processing for extracting subcarrier components corresponding to the i-th frequency channel from the transformed signal to thereby generate an i-th mobile station separated signal consisting only of the signal transmitted by the i-th mobile station; and delay profile generating processing for generating an i-th delay profile by being provided with an input of the i-th mobile station separated signal.

Still further, the present invention provides a timing estimation method for estimating a start timing of signal processing performed by a base station apparatus, which uses OFDM as a radio transmission method to simultaneously communicate with a maximum of M (M is a natural number) mobile stations in one OFDM symbol time, by receiving an i-th (i = 1,2,··· ,M) transmission signal transmitted from an i-th mobile station. The timing estimation method is characterized by including the steps of: allocating an i-th frequency channel to be used when transmitting a pilot signal to the i-th mobile station; transmitting an i-th frequency channel signal representing the i-th frequency channel to the i-th mobile station; generating a signal transformed on a frequency axis as a transformed signal by deleting a guard interval from a received signal obtained by receiving an i-th transmission signal transmitted by the i-th mobile station in response to the i-th frequency channel signal and Fourier transforming the signal from which the guard interval has been deleted; generating an i-th mobile station separated signal consisting only of the signal transmitted by the i-th mobile station by extracting subcarrier components corresponding to the i-th frequency channel from the transformed signal; and generating an i-th delay profile by being provided with an input of the i-th mobile station separated signal.

### Effects of The Invention

According to the present invention, signals received by the base station from a plurality of mobile stations in one OFDM symbol time are separated on the basis of frequency channels used by the mobile stations so that respective delay profiles of the separated signals are estimated. Therefore, the delay profiles of the transmission signals from the mobile stations can be estimated independently. Further, since the signals received from the mobile stations are separated, even if a transmission signal from a certain mobile station has a delay exceeding the guard interval, the estimation of delay profiles of transmission signals from the other mobile stations is not affected by such delay, and thus estimation of the delay profiles can be performed with high accuracy.

### BRIEF DESCRIPTION OF THE DRAWINGS

Fig. 1 is a block diagram showing configuration of a base station apparatus of a radio transmission system according to a first embodiment of the present invention;
Fig. 2 is a block diagram showing configuration of a mobile station apparatus of the radio transmission system according to the first embodiment of the present invention;
Fig. 3 is a block diagram showing internal configuration of a delay profile estimation circuit included in the base station apparatus of Fig. 1;
Fig. 4 is a diagram showing an example of configuration (arrangement) of a frequency channel;
Fig. 5 is a diagram showing an example of subcarrier component levels of a mobile station separated signal input to a delay profile estimation circuit;
Fig. 6 is a block diagram showing internal configuration of a delay profile estimation circuit used in a radio transmission system according to a second embodiment of the present invention;
Fig. 7 is a diagram illustrating an example of configuration (arrangement) of a frequency channel usable in the radio transmission system according to the second embodiment of the present invention;
Fig. 8 is a diagram illustrating a first example of subcarrier component levels of a mobile station separated signal input to the delay profile estimation circuit of Fig. 6;
Fig. 9 is a diagram illustrating a second example of the subcarrier component levels of the mobile station separated signal input to the delay profile estimation circuit of Fig. 6;
Fig. 10 is a diagram illustrating subcarrier component levels of a synthesized signal obtained by synthesizing the mobile station separated signal of Fig. 8 with the mobile station separated signal of Fig. 9;
Fig. 11 is a diagram illustrating a third example of the subcarrier component levels of the mobile station separated signal input to the delay profile estimation circuit of Fig. 6;
Fig. 12 is a diagram illustrating subcarrier component levels of a synthesized signal obtained by synthesizing the mobile station separated signal of Fig. 8 with the mobile station separated signal of Fig. 11;
Fig. 13 is a block diagram showing internal configuration of a delay profile estimation circuit used in a radio transmission system according to a third embodiment of the present invention;
Fig. 14 is a diagram for explaining operation of an interpolator included in the delay profile estimation circuit of Fig. 13;
Fig. 15 is a block diagram showing internal configuration of a delay profile estimation circuit used in a radio transmission system according to a fourth embodiment of the present invention;
Fig. 16 is a diagram showing a first example of a frequency channel arrangement usable in the radio transmission system according to the fourth embodiment of the present invention;
Fig. 17 is a diagram showing a second example of the frequency channel arrangement usable in the radio transmission system according to the fourth embodiment of the present invention;
Fig. 18 is a diagram illustrating subchannel component levels of a mobile station separated signal generated by a frequency channel CH(1) in the frequency channel arrangement of Fig. 16;
Fig. 19 is a diagram illustrating subchannel component levels of a mobile station separated signal generated by the frequency channel CH(1) in the frequency channel arrangement of Fig. 17;
Fig. 20 is a diagram illustrating subcarrier component levels of a synthesized signal obtained by synthesizing the mobile station separated signal of Fig. 18 with the mobile station separated signal of Fig. 19; and
Fig. 21 is a diagram illustrating subcarrier component levels obtained as a result of interpolating the synthesized signal of Fig. 20.

### BEST MODE FOR CARRYING OUT THE INVENTION

Some of the best modes for carrying out the present invention will be described with reference to the drawings.

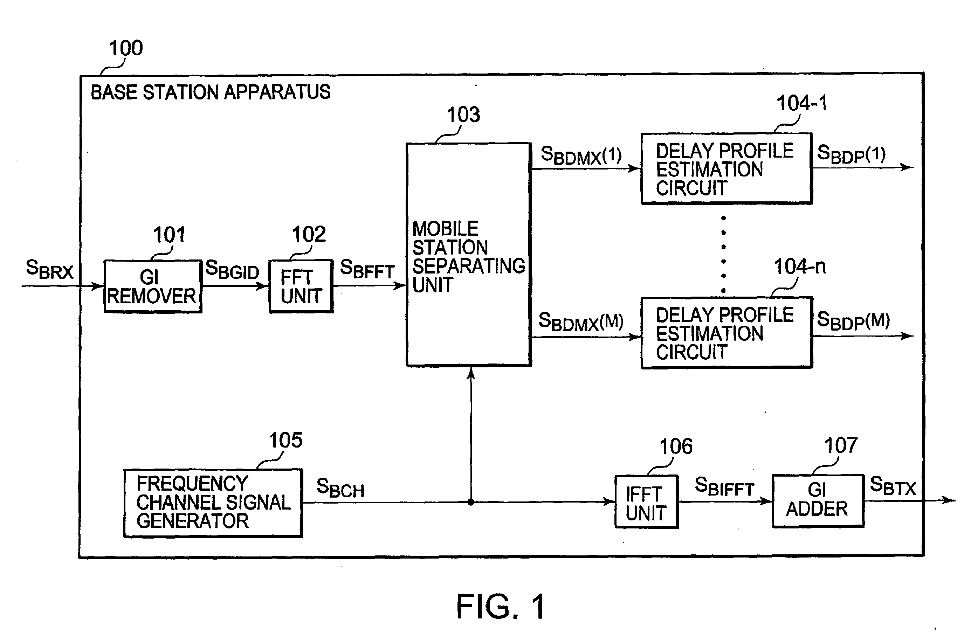

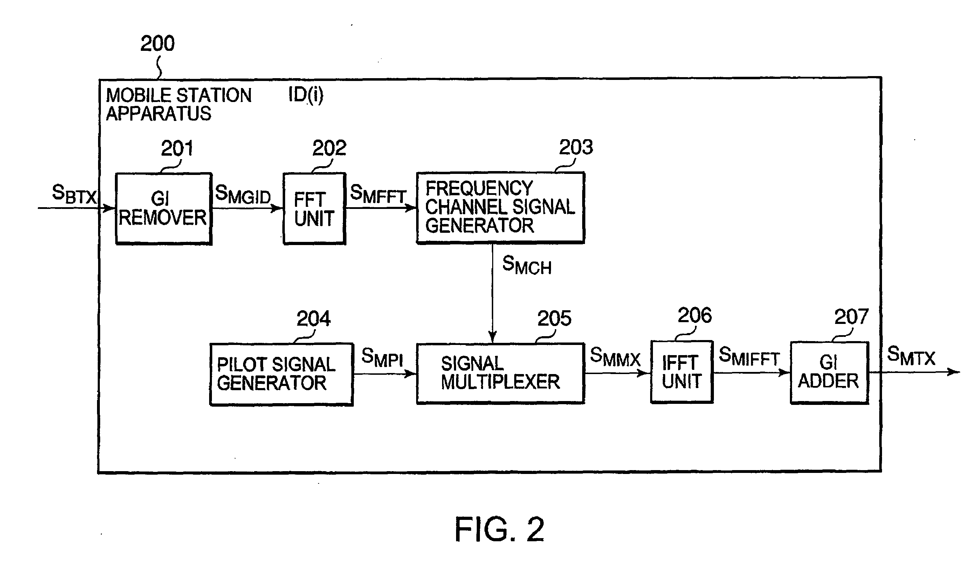

Fig. 1 is a block diagram showing configuration of a wireless communication apparatus (base station apparatus) 100 used in a base station of an OFDM-type radio transmission system according to a first embodiment of the present invention. Fig. 2 is a block diagram showing configuration of a wireless communication apparatus (mobile station apparatus) 200 used in a mobile station of the radio transmission system. The radio transmission system according to the first embodiment of the invention is designed to communicate simultaneously with a maximum of M (M is a natural number) mobile stations in one OFDM time. Fig. 1 illustrates only the part relating to the present invention, namely the part that is required to estimate delay profiles of signals transmitted from a maximum of M mobile stations in one OFDM symbol time in association with the respective mobile stations. Similarly, Fig. 2 also shows only the part relating to the present invention. The other parts of the base station apparatus 100 and the mobile station apparatus 200 can be constituted by using well-known techniques.

Referring to Fig. 1, the base station apparatus 100 includes a GI (Guard Interval) remover 101, an FFT (Fast Fourier Transformation) unit 102, a mobile station separating unit 103, a delay profile estimation circuit 104, a frequency channel signal generator 105, an IFFT (Inverse FFT) unit 106, and a GI adder 107.

Referring to Fig. 2, the mobile station apparatus 200 includes a GI remover 201, an FFT unit 202, a frequency channel signal extractor 203, a pilot signal generator 204, a signal multiplexer 205, an IFFT unit 206, and a Gl adder 207.

Operation of the base station apparatus 100 and the mobile station apparatus 200 will be described with reference to Figs. 1 and 2.

Firstly, the base station apparatus 100 assigns a mobile station identification number to the mobile station apparatus 200 having started communication with the base station apparatus 100 by a well-known method. The base station apparatus 100 is able to simultaneously communicate with a maximum of M (M is a natural number) mobile stations, and assigns different mobile station identification numbers ID(1) to ID(M) to the mobile stations, respectively.

The frequency channel signal generator 105 functions as frequency channel allocating means. Specifically, the frequency channel signal generator 105 allocates frequency channels CH(j) (j is a natural number equal to or less than L (≥M) and corresponds with i in one-to-one relationship, while L is a number of frequency channels available to the base station apparatus 100) to be used when transmitting a pilot signal, to the mobile station apparatuses 200 assigned with mobile station identification numbers ID(i) (i is 1, 2,···, M). Each of the frequency channels CH(1) to CH(L) is formed of a plurality of subcarriers.

The allocation of the frequency channel CH(j) to the mobile station apparatus 200 having started communication can be carried out by selecting one or more frequency channels from among unused frequency channels. For example, when L=M, and subcarriers constituting the first to L-th frequency channels are preliminarily determined, respectively, the frequency channel CH(i) can be assigned to the mobile station assigned with the identification number ID(i). Alternatively, frequency channels selected randomly or according to a predetermined rule may be allocated, with a predetermined period, to all the mobile station apparatuses 200 in communication. Further, a frequency channel to be assigned may be newly formed by randomly selecting a predetermined number of subcarriers from unused subcarriers.

The frequency channel signal generator 105 internally stores a frequency channel table representing a correspondence relationship between the identification numbers ID(1) to ID(M) assigned to the mobile station apparatuses 200 and the frequency channels CH(j) allocated thereto. The frequency channel signal generator 105 updates the frequency channel table every time a frequency channel is allocated. The frequency channel signal generator 105 further outputs a signal (channel information) representing the contents of the frequency channel table as a frequency channel signal S_{BCH} to the IFFT unit 106 and the mobile station separating unit 103, with a predetermined period.

The IFFT unit 106 inverse Fourier transforms the frequency channel signal S_{BCH} from the frequency channel signal generator 105 and outputs the resultant to the Gl adder 107 as a frequency channel IFFT signal S_{BIFFT}.

The Gl adder 107 adds a guard interval to the frequency IFFT signal S_{BIFFT} from the IFFT unit 106, and outputs the resultant as a base station transmission signal S_{BTX}. The base station transmission signal S_{BTX} is radio transmitted to the outside by a transmitter (not shown). In this manner, the IFFT unit 106 and the GI adder 107 function as frequency channel signal transmitting means together with the transmitter (not shown).

On the other hand, the mobile station apparatus 200 receives a base station transmission signal S_{BTX} by means of a receiver (not shown). This receiver, the Gl remover 201, the FFT unit 202, and the frequency channel signal extractor 203 function as frequency channel identifying means. The base station transmission signal S_{BTX} received by the receiver is input to the GI remover 201.

The GI remover 201 deletes a guard interval from the input base station transmission signal S_{BTX}, and outputs the resultant to the FFT unit 202 as a mobile station GI deleted signal S_{MGID}.

The FFT unit 202 Fourier transforms the mobile station GI deleted signal S_{MGID} into a mobile station FFT signal S_{MFFT} and outputs the same to the frequency channel signal extractor 203.

The frequency channel signal extractor 203 extracts information of the frequency channel CH(j) corresponding to the identification number ID(i) assigned to the mobile station apparatus 200 from the mobile station FFT signal S_{MFFT} (equals to the frequency channel signal S_{BCH}) received from the FFT unit 202, and outputs the same to the signal multiplexer 205 as mobile station frequency channel information S_{MCH}.

The pilot signal generator 204 generates a pilot signal S_{MPI} and outputs the same to the signal multiplexer 205.

The signal multiplexer 205 receives the mobile station frequency channel information S_{MCH} from the frequency channel signal extractor 203 and the pilot signal S_{MPI} from the pilot signal generator 204. The signal multiplexer 205 then multiplexes the pilot signal S_{MPl} onto the frequency channel CH(j) indicated by the mobile station frequency channel information S_{MCH}, and outputs the resultant to the IFFT unit 206 as a mobile station multiplexed signal S_{MMX}. In this manner, the signal multiplexer 205 functions as pilot signal multiplexing means.

The IFFT unit 206 inverse Fourier transforms the mobile station multiplexed signal S_{MMX} from the signal multiplexer 205 and outputs a mobile station IFFT signal S_{MIFFT}.

The GI adder 207 adds a guard interval to the mobile station IFFT signal S_{MIFFT}, and outputs the resultant as a mobile station transmission signal S_{MTX}.

The IFFT unit 206 and the GI adder 207 function as a transmission signal generator.

The mobile station transmission signal S_{MTX} output from the GI adder 207 is radio transmitted to the outside by a transmitter (not shown).

The base station apparatus 100 receives the mobile station transmission signal S_{MTX} transmitted by the mobile station apparatus 200 as a received signal S_{BRX}. If there are a plurality of mobile station apparatuses 200, the received signal S_{BRX} contains a plurality of mobile station transmission signals S_{MTX} transmitted by those mobile station apparatuses. Specifically, the base station apparatus 100 receives the mobile station transmission signals S_{MTX} simultaneously from a maximum of M mobile station apparatuses 200 (of the identification numbers ID(1) to ID(M)) (in one OFMD symbol time).

The GI remover 101 of the base station apparatus 100 deletes a guard interval from the received signal S_{BRX} and outputs the resultant to the FFT unit 102 as a base station GI deleted signal S_{BGID}.

The FFT unit 102 Fourier transforms the base station GI deleted signal S_{BGID} from the GI deleting unit 101 and outputs the resultant to the mobile station separating unit 103 as a base station FFT signal S_{BFFT}. The FFT unit 102 forms signal transformation means together with the GI remover 101.

As described above, the mobile station separating unit 103 is provided with an input of the frequency channel signal S_{BCH} from the frequency channel signal generator 105. Upon receiving the input of the base station FFT signal S_{BFFT} from the FFT unit 102, the mobile station separating unit 103 separates the base station FFT signal S_{BFFT} in correspondence with the respective mobile stations by using the frequency channel signal S_{BCH} which has been generated and supplied one RTT (Round Trip Time) before. More specifically, the mobile station separating unit 103 separates subcarrier components contained in the frequency channels CH(j) corresponding to the mobile station identification numbers ID(i) from the base station FFT signal S_{BFFT} to provide mobile station separated signals S_{BDMX}(i), and outputs the same to i-th delay profile estimation circuits 104-i, respectively. In this manner, the mobile station separating unit 103 functions as mobile station signal separating means.

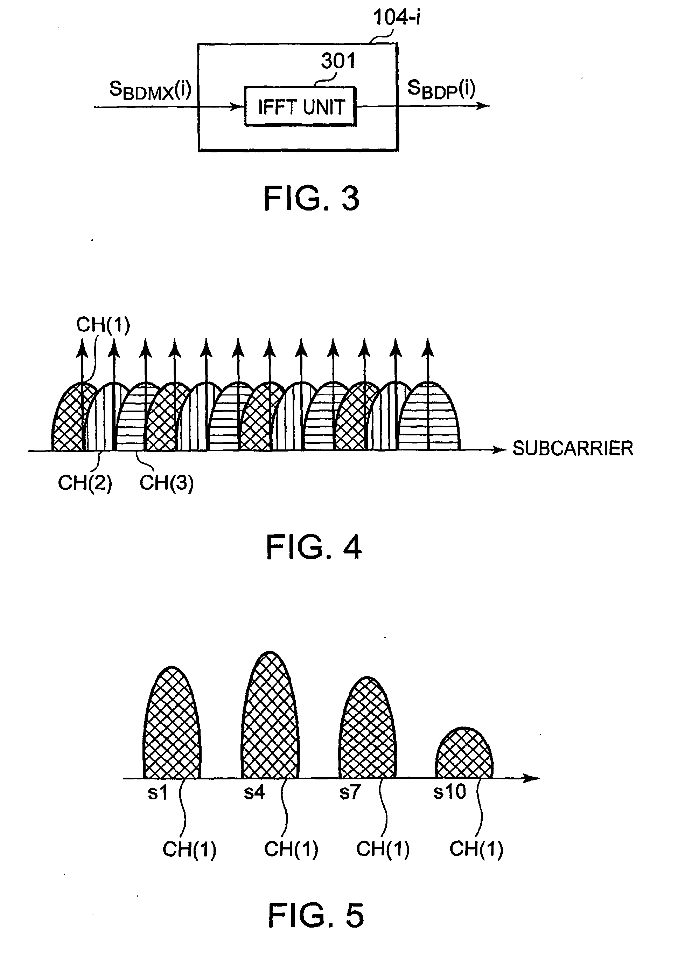

In order to operate as delay profile generating means, each delay profile estimation circuit 104-i includes an IFFT unit 301 as shown in Fig. 3. The IFFT unit 301 inverse Fourier transforms the mobile station separated signal S_{DBMX}(i) from the mobile station separating unit 103 and outputs the resultant as a delay profile estimation signal S_{BDP}(i).

It is assumed here that the frequency channels CH(1) to CH(L) available to the base station apparatus 100 are realized by N (N is a multiple of M, and L=M) subcarriers consisting of a first to N-th subcarriers, and each frequency channel CH(j) includes {j+M×(x-1)}-th (x being 1, 2, ... , and N/M) subcarriers, or N/M subcarriers in total. If M=3, for example, the frequency channels CH(1) to CH(3) are as shown in Fig. 4. Specifically, in this case, the N subcarriers arranged with a predetermined period are allocated to the frequency channels CH(1) to CH(3) with two subcarriers intervals. When it is assumed that the frequency channel CH(1) is allocated to the mobile station apparatus 200 assigned with the identification number ID(1) (i=j), the corresponding delay profile estimation circuit 104-1 is provided with an input of the frequency channel CH(1) signal consisting of subcarriers s1, s4, ..., s10, ···, as the mobile station separated signal S_{DBMX}(1), as shown in Fig. 5. The IFFT unit 301 of the delay profile estimation circuit 104-1 inverse Fourier transforms the mobile station separated signal S_{DBMX}(1), and outputs a delay profile estimation signal S_{BDP}(1).

When the mobile station separated signal S_{DBMX}(i) input to the IFFT unit 301 has periodicity as described above, the delay profile estimation signal S_{BDP}(i) obtained also exhibits periodicity. This means that the delay profile estimation signal S_{BDP}(i) includes two peaks which are not relevant to an actual propagation path, in addition to peaks indicating a correct delay profile. Accordingly, the reception timing cannot be identified correctly by directly using the delay profile estimation signal S_{BDP}(i) output from the IFFT unit 301. Therefore, in order to enable identification of correct reception timing, it is necessary to take some measures, for example providing a selection circuit at the output of the delay profile estimation circuit 104-i to select a timing of a maximum magnitude (maximum received power) of the delay profile estimation signal S_{BDP}(i).

In the manner as described above, the radio transmission system according to the first embodiment of the invention is able to estimate the received signal delay profile independently for each of the mobile stations.

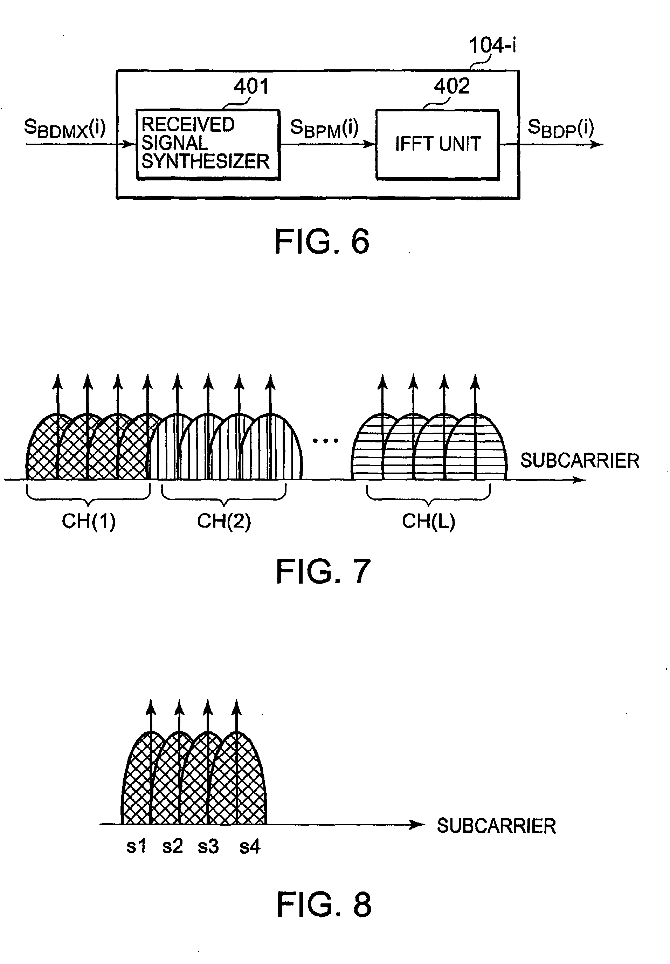

A radio transmission system according to a second embodiment of the present invention will be described with reference to Figs. 6 to 12.

The radio transmission system according to the second embodiment is different from the radio transmission system according to the first embodiment
in that, as shown in Fig. 6, the delay profile estimation circuit 104-i is composed of a received signal synthesizer 401 and an IFFT unit 402.

The received signal synthesizer 401 synthesizes the mobile station separated signals S_{BDMX}(i) input sequentially, by T (T is an integer of 2 or more) symbols at a time. Specifically, the received signal synthesizer 401 generates a new synthesized signal S_{BPM}(i) corresponding to one OFDM symbol every time a mobile station separated signal S_{BDMX}(i) corresponding to T symbols is input.

The IFFT unit 402 inverse Fourier transforms the synthesized signal S_{BPM}(i) and outputs the resultant as a delay profile estimation signal S_{BDP}(i).

Operation of the received signal synthesizer 401 will be described in more detail on the assumption that T=2. It is assumed here that the frequency channels CH(1) to CH(L) available to the base station apparatus 100 are realized by N subcarriers consisting of a first to N-th (N is a multiple of M, and M=L) subcarriers, and each frequency channel CH(j) includes {N/Mx(j-1)+1}-th to (N/Mxj)-th subcarriers, or N/M subcarriers in total. If N/M=4, for example, the frequency channel CH(1) to CH(L) are as shown in Fig. 7. Specifically, in this case, N subcarriers arranged with a predetermined period are divided into sets of four adjacent subcarriers, which are allocated to the frequency channels CH(1) to CH(L).

The frequency channel CH(j) allocated to the mobile station apparatus 200 assigned with the identification number ID(i) may be varied periodically or aperiodically. Therefore, even successive mobile station separated signals S_{BDMX}(i) corresponding to two symbols (T = 2) may be transmitted with different subcarriers. A description will be made separately of a case when the mobile station apparatuses 200 assigned with the identification number ID(i) use a same frequency channel and of a case when they use different frequency channels.

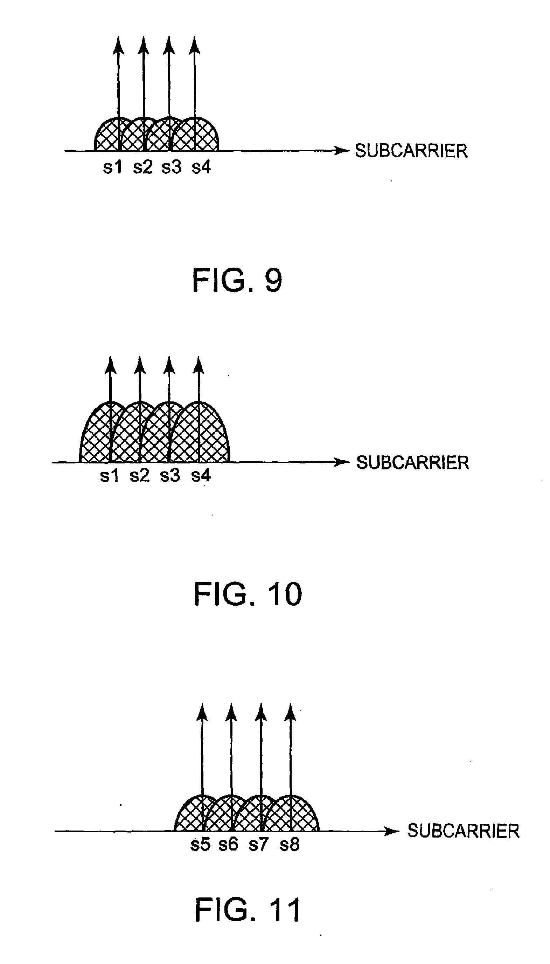

If the mobile station apparatuses 200 assigned with the identification number ID(i) sequentially transmits transmission signals corresponding to two symbols by using only the frequency channel CH(1) shown in Fig. 7, the received signal synthesizer 401 of the delay profile estimation circuit 104-i corresponding to the mobile station apparatus 200 is sequentially provided with inputs, for example, of a first mobile station separated signal S_{BDMX}(i) having subcarrier components s1 to s4 shown in Fig. 8 and a second mobile station separated signal S_{BDMX}(i) having subcarrier components s1 to s4 shown in Fig. 9. When synthesizing the first and second mobile station separated signals S_{BDMX}(i) having the same subcarrier components s1 to s4, the received signal synthesizer 401 coherently averages the subcarrier components S1 to S4 of these first and second mobile station separated signals S_{BDMX}(i). The resultant signal is multiplexed on the subcarriers s1 to s4 to obtain a synthesized signal S_{BPM}(i). The synthesized signal S_{BPM}(i) has subcarrier components s1 to s4 shown in Fig. 10 which are obtained by arithmetically averaging the subcarrier components s1 to s4 shown in Figs. 8 and 9.

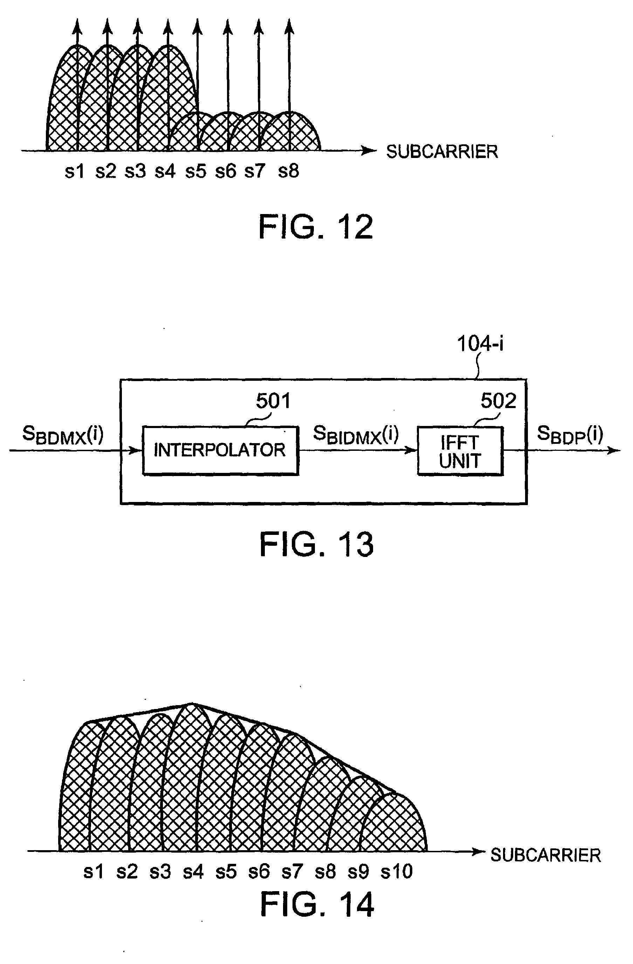

In contrast, when the mobile station apparatus 200 assigned with the identification number ID(i) transmits transmission signals corresponding to two symbols by sequentially using the frequency channels CH(1) and CH(2) shown in Fig. 7, the received signal synthesizer 401 of the corresponding delay profile estimation circuit 104-i is sequentially provided with inputs, for example, of a first mobile station separated signal S_{BDMX}(i) having subcarrier components s1 to s4 shown in Fig. 8 and a second mobile station separated signal S_{BDMX}(i) having subcarrier components s5 to s8 shown in Fig. 11. In this case, the received signal synthesizer 401 multiplexes the subcarrier components s1 to s4 and s5 to s8 of the first and second mobile station separated signals S_{BDMX}(i) directly on the subcarriers s1 to s8 to provide a synthesized signal S_{BPM}(i). This synthesized signal S_{BPM}(i) has subcarrier components s1 to s8 shown in Fig. 12, which are obtained by adding the subcarrier components s1 to s4 of Fig. 8 and the subcarrier components s5 to s8 of Fig. 11.

The IFFT unit 402 performs the inverse Fourier transformation described above on the synthesized signal S_{BPM}(i) regardless of whether the transmission signal corresponding to two symbols has been transmitted through a same channel or different channels, and outputs a delay profile estimation signal S_{BDMX}(i).

In the radio transmission system according to the second embodiment of the present invention, the delay profile is estimated by utilizing the synthesized signal S_{BPM}(i) obtained by synthesizing the mobile station separated signals S_{SDMX}(i) corresponding to a plurality of symbols by means of the delay profile estimation circuits 104-i. This enables improvement in the estimation accuracy.

A radio transmission system according to a third embodiment of the present invention will be described with reference to Figs. 13 and 14.

The radio transmission system according to the third embodiment is different from the radio transmission system according to the first embodiment in that the delay profile estimation circuit 104-i is composed of an interpolator 501 and an IFFT unit 402 as shown in Fig. 13.

In the third embodiment, like in the first embodiment, each frequency channel CH(j) allocated to the mobile station apparatus 200 has {j+Mx(x-1)}-th subcarriers (x is 1, 2, ···, N/M), or N/M subcarriers in total.

Upon receiving the input of the mobile station separated signal S_{BDMX}(i) from the mobile station separating unit 103, the interpolator 501 uses the subcarrier components contained in the mobile station separated signal S_{BDMX}(i) to linearly interpolate subcarrier components therebetween. The interpolator 501 then generates a mobile station interpolation signal S_{SIDMX}(i) containing the interpolated subcarrier components and outputs the same to the IFFT unit 502.

For example, when the frequency channel allocated to the mobile station assigned with the identification number ID(i) is the frequency channel CH(1) shown in Fig. 4, specifically, when the mobile station separated signal S_{BDMX}(i) contains the subcarrier components s1, s4, s7 and s10 as shown in Fig. 5, the interpolator 501 performs linear interpolation using these subcarrier components to obtain values of the subcarrier components of s2, s3, s5, s6, s8 and s9 as shown in Fig. 14. The interpolator 501 generates a mobile station interpolation signal S_{BIDMX}(i) having the subcarrier components as shown in Fig. 14 and outputs the same to the IFFT unit 502.

The IFFT unit 502 inverse Fourier transforms the mobile station interpolation signal S_{BIDMX}(i) from the interpolator 501 and outputs the resultant as a delay profile estimation signal S_{BDP}(i).

In the radio transmission system according to the third embodiment of the invention, the periodicity of the signal input to the IFFT unit 502 can be removed by using the subcarrier components contained in the mobile station separated signal S_{BDMX}(i), and assigning values obtained by the linear interpolation as the subcarrier components located therebetween. Therefore, the delay profile estimation signal S_{BDP}(i) will not exhibit a peak that is not relevant to an actual propagation path, and thus no selection circuit or the like is required unlike the radio transmission system according to the first embodiment.

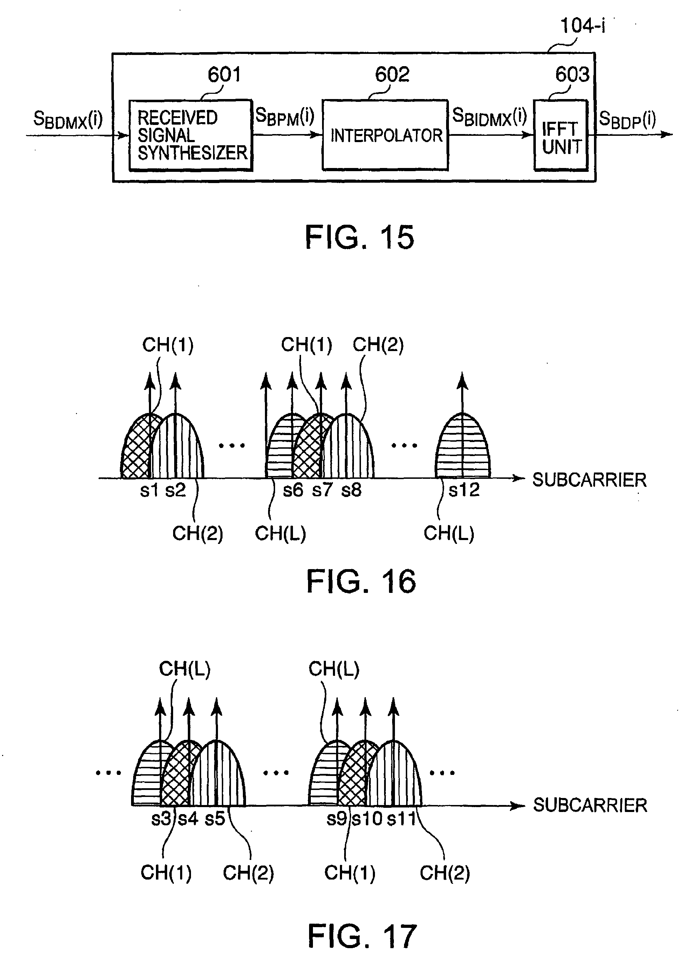

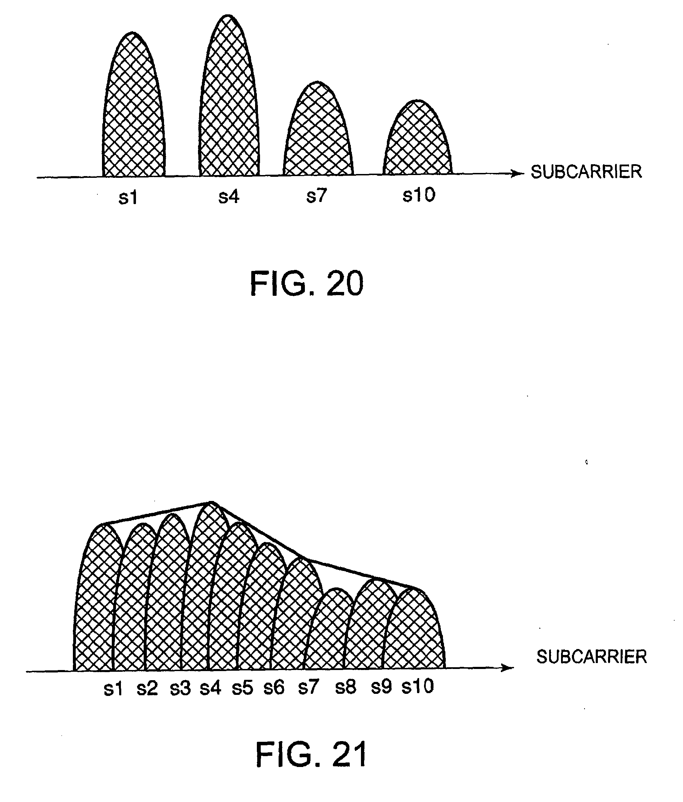

A fourth embodiment of the present invention will be described with reference to Figs. 16 and 21.

A radio transmission system according to the fourth embodiment is different from the radio transmission system according to the first embodiment in that the delay profile estimation circuit 104-i is composed of a received signal synthesizer 601, an interpolator 602, and an IFFT unit 603, as shown in Fig. 15. Namely, the radio transmission system according to the fourth embodiment is a combination of the systems of the second embodiment and the third embodiment.

The received signal synthesizer 601 synthesizes mobile station separated signals S_{BDMX}(i) input sequentially, by T (T is an integer of 2 or more) symbols at a time. Specifically, the received signal synthesizer 601 generates a new synthesized signal S_{BPM}(i) corresponding to one OFDM symbol every time a mobile station separated signal S_{SDMX}(i) corresponding to T symbols is input.

The interpolator 602 uses the subcarrier components contained in the synthesized signal S_{BPM}(i) to linearly interpolate the subcarrier components therebtween. The interpolator 602 then generates a mobile station interpolation signal S_{BIDMX}(i) containing the interpolated subcarrier components and outputs the same to the IFFT unit 603.

The IFFT unit 603 inverse Fourier transforms the mobile station interpolation signal S_{BIDMX}(i) from the interpolator 602 and outputs a delay profile estimation signal S_{BDP}(i).

A detailed description will be made of operation of the received signal synthesizer 601 and the interpolator 602 in terms of a case in which the frequency channels allocated to the mobile stations are periodically changed, and T=2.

It is assumed here that a case in which the frequency channel CH(J) allocated to the mobile station apparatus 200 assigned with the identification number ID(i) contains {j+2Mx(x-1)}-th (x is 1, 2,···, N/2M, and N is an even multiple of M) subcarriers, or N/2M subcarriers in total and a case in which the frequency channel CH(j) contains {j+M×(2x-1)}-th (x is 1, 2,···, N/2M) subcarriers, or N/2M subcarriers in total are repeated alternately. Specifically, for example, a case in which the frequency channels CH(1) to CH(L) have the subcarrier components shown in Fig. 16 and a case they have the subcarrier components shown in Fig. 17 are repeated alternately.

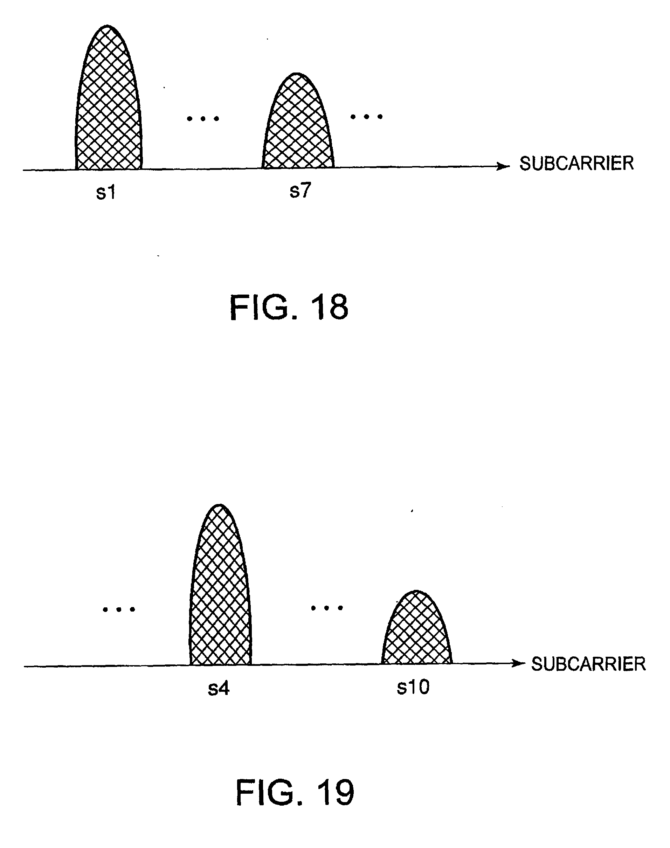

When the delay profile estimation circuit 104-i corresponding to the mobile station apparatus 200 assigned with the frequency channel CH(1) is sequentially provided with inputs of mobile station separated signals S_{BDMX}(i) having subcarrier components shown in Figs. 18 and 19 as first and second OFDM symbols, respectively, the received signal synthesizer 601 synthesizes these signals and outputs a synthesized signal S_{BPM}(i). The synthesized signal S_{BPM}(i) is obtained by multiplexing the subcarrier components s1 and s7 of the first OFDM symbol and the subcarrier components s4 and s10 of the second OFDM symbol on the subcarriers s1, s4, s7 and s10, and has subcarrier components as shown in Fig. 20.

The interpolator 602 uses the subcarrier components s1, s4, s7 and s10 contained in the synthesized signal S_{BPM}(i) from the received signal synthesizer 601 to linearly interpolate the subcarrier components s2, s3, s5, s6, s8 and s9 therebetween. The interpolator 602 then outputs a mobile station interpolation signal S_{BIDMX}(i) having subcarrier components as shown in Fig. 21.

As described above, the IFFT unit 603 inverse Fourier transforms the synthesized signal S_{BIDMX}(i) and outputs a delay profile estimation signal S_{BDP}(i).

According to the fourth embodiment, both the synthesis and interpolation of the mobile station separated signals are performed, whereby the accuracy of estimating the delay profile can be improved further more.

Although the present invention has been described on the basis of some of its preferred embodiments, the present invention can be embodied not only in hardware but also in the form of software (program) causing a computer to execute operation of the base station apparatus.

## Claims

1. A base station apparatus capable of simultaneous communication with a plurality of mobile stations by an OFDM method, comprising:
a separating unit for separating a received signal in correspondence with the plurality of mobile stations; and
a plurality of delay profile estimation units for obtaining delay profiles of the respective signals separated by the separating unit.

2. The base station apparatus according to Claim 1, further comprising a channel allocating unit for respectively allocating different communication channels to the plurality of mobile stations,
wherein the separating unit separates the received signal in correspondence with the plurality of mobile stations based on channel information from the channel allocating unit.

3. The base station apparatus according to Claim 1 or 2, wherein each of the plurality of delay profile estimation units has an inverse Fourier transforming unit.

4. A radio transmission system composed of base stations using OFDM as a radio transmission method and mobile stations, in which M (M is a natural number) mobile stations at maximum per base station simultaneously perform communication in one OFDM symbol time, wherein:
each of the base stations comprises:
frequency channel allocating means for allocating an i-th frequency channel to be used for transmitting a pilot signal to an i-th (i = 1, 2,···, M) mobile station; and
frequency channel signal transmitting means for transmitting an i-th frequency channel signal representing the i-th frequency channel to the i-th mobile station, and
the i-th mobile station comprises:
frequency channel identifying means for receiving the i-th frequency channel signal and identifying the i-th frequency channel to be used for transmitting the pilot signal;
pilot signal multiplexing means for multiplexing a known pilot signal on the identified i-th frequency channel to generate an i-th pilot-multiplexed signal; and
transmission signal generating means for inverse Fourier transforming the i-th pilot-multiplexed signal into a signal on a time axis, and adding a guard interval to the inverse Fourier transformed signal to generate an i-th transmission signal,
the base station further comprising:
signal transformation means for deleting a guard interval from a received signal obtained by receiving the i-th transmission signal, and Fourier transforming the signal from which the guard interval has been deleted, to thereby generate a transformed signal on a frequency axis as a transformed signal;
mobile station signal separating means for extracting, from the transformed signal, subcarrier components corresponding to the i-th frequency channel to thereby generate an i-th mobile station separated signal consisting only of the signal transmitted by the i-th mobile station; and
delay profile generating means for generating an i-th delay profile from the i-th mobile station separated signal.

5. The radio transmission system according to Claim 4, wherein the delay profile generating means includes means for inverse Fourier transforming the i-th mobile station separated signal to generate the i-th delay profile.

6. The radio transmission system according to Claim 4, wherein:
the i-th frequency channel is composed of N/M (N is a multiple of M) subcarriers selected from N subcarriers consisting of a first to N-th subcarriers; and
the delay profile generating means includes means for averaging the i-th mobile station separated signal for each same subcarrier component to generate an i-th averaged signal having the first to N-th subcarrier components, and means for inverse Fourier transforming the i-th averaged signal to generate an i-th delay profile.

7. The radio transmission system according to Claim 4, wherein:
the i-th frequency channel is composed of N/M (N is a multiple of M) subcarriers selected from N subcarriers consisting of a first to N-th subcarriers; and
the delay profile generating means includes means for interpolating the subcarrier components between the subcarriers corresponding to the i-th frequency channel by using the i-th mobile station separated signal to thereby generate an i-th interpolation signal, and means for inverse Fourier transforming the i-th interpolation signal to generate an i-th delay profile.

8. The radio transmission system according to Claim 4, wherein:
the i-th frequency channel is composed of N/M (N is a multiple of M) subcarriers selected from N subcarriers consisting of a first to N-th subcarriers; and
the delay profile generating means includes means for averaging the i-th mobile station separated signal for each same subcarrier component to generate an i-th averaged signal having the first to N-th subcarrier components, means for interpolating the subcarrier components between the subcarriers corresponding to the i-th frequency channel in the i-th averaged signal to thereby generate an i-th interpolation signal, and means for inverse Fourier transforming the i-th interpolation signal to generate an i-th delay profile.

9. The radio transmission system according to any one of Claims 4 to 8, wherein the base station defines the i-th frequency channel as a frequency channel composed of a total of N/M (N is a multiple of M) successive subcarriers consisting of {N/M*(j-1)+1}-th to (N/M*j)-th subcarriers (j is a natural number equal to or less than M and corresponds with i in one-to-one relationship) in one OFDM symbol composed of a total of N subcarriers consisting of a first to N-th subcarriers.

10. The radio transmission system according to any one of Claims 4 to 8, wherein the base station defines the i-th frequency channel as a frequency channel composed of a total of N/M (N is a multiple of M) subcarriers located at {j+M*(x-1)}-th (j is a natural number equal to or less than M and corresponds with i in one-to-one relationship, and x is 1, 2, ···, N/M) positions in one OFDM symbol composed of a total of N subcarriers consisting of a first to N-th subcarriers.

11. The radio transmission system according to any one of Claims 4 to 8, wherein the base station defines the i-th frequency channel as a frequency channel composed of a total of N/M (N is a multiple of M) subcarriers which are randomly selected from one OFDM symbol composed of a total of N subcarriers consisting of a first to N-th subcarriers on the condition that the selected subcarriers do not overlap with those used by other frequency channels.

12. A base station apparatus using OFDM as a radio transmission method to simultaneously communicate with a maximum of M (M is a natural number) mobile stations in one OFDM symbol time, the base station apparatus comprising:
frequency channel allocating means for allocating an i-th (i = 1, 2,···, M) frequency channel to be used for transmitting a pilot signal to an i-th mobile station;
frequency channel signal transmitting means for transmitting an i-th frequency channel signal representing the i-th frequency channel to the i-th mobile station;
signal transformation means for deleting a guard interval from a received signal obtained by receiving an i-th transmission signal transmitted by the i-th mobile station in response to the i-th frequency channel signal, and Fourier transforming the signal from which the guard interval has been deleted to thereby generate a signal transformed on a frequency axis as a transformed signal;
mobile station signal separating means for extracting subcarrier components corresponding to the i-th frequency channel from the transformed signal to thereby generate an i-th mobile station separated signal consisting only of the signal transmitted by the i-th mobile station; and
delay profile generating means for generating an i-th delay profile from the i-th mobile station separated signal.

13. The base station apparatus according to Claim 12, wherein the delay profile generating means includes means for inverse Fourier transforming the i-th mobile station separated signal to generate the i-th delay profile.

14. The base station apparatus according to Claim 12, wherein:
the i-th frequency channel is composed of N/M (N is a multiple of M) subcarriers selected from N subcarriers consisting of a first to N-th subcarriers; and
the delay profile generating means includes means for averaging the i-th mobile station separated signal for each same subcarrier component to generate an i-th averaged signal having the first to N-th subcarrier components, and means for inverse Fourier transforming the i-th averaged signals to generate an i-th delay profile.

15. The base station apparatus according to Claim 12, wherein:
the i-th frequency channel is composed of N/M (N is a multiple of M) subcarriers selected from N subcarriers consisting of a first to N-th subcarriers; and
the delay profile generating means includes means for interpolating the subcarrier components between the subcarriers corresponding to the i-th frequency channel by using the i-th mobile station separated signal to thereby generate an i-th interpolation signal, and means for inverse Fourier transforming the i-th interpolation signal to generate an i-th delay profile.

16. The base station apparatus according to Claim 12, wherein:
the i-th frequency channel is composed of N/M (N is a multiple of M) subcarriers selected from N subcarriers consisting of a first to N-th subcarriers; and
the delay profile generating means includes means for averaging the i-th mobile station separated signal for each same subcarrier component to generate an i-th averaged signal having the first to N-th subcarrier components, means for interpolating the subcarrier components between the subcarriers corresponding to the i-th frequency channel in the i-th averaged signal to thereby generate an i-th interpolation signal, and means for inverse Fourier transforming the i-th interpolation signal to generate an i-th delay profile.

17. The base station apparatus according to any one of Claims 12 to 16, wherein the i-th frequency channel is a frequency channel composed of a total of N/M (N is a multiple of M) successive subcarriers consisting of {N/M*(j-1)+1}-th (j is a natural number equal to or less than M and corresponds with i in one-to-one relationship) to (N/M*j)-th subcarriers in one OFDM symbol composed of a total of N subcarriers consisting of a first to N-th subcarriers.

18. The base station apparatus according to any one of Claims 12 to 16, wherein the i-th frequency channel is a frequency channel composed of a total of N/M (N is a multiple of M) subcarriers located at {j+M*(x-1)}-th (j is a natural number equal to or less than M and corresponds with i in one-to-one relationship, and x is 1, 2,···, N/M) positions in one OFDM symbol composed of a total of N subcarriers consisting of a first to N-th subcarriers.

19. The base station apparatus according to any one of Claims 12 to 16, wherein the i-th frequency channel is a frequency channel composed of a total of N/M (N is a multiple of M) subcarriers which are randomly selected from one OFDM symbol composed of a total of N subcarriers consisting of a first to N-th subcarriers on the condition that the selected subcarriers do not overlap with those used by other frequency channels.

20. A base station apparatus program for causing a base station apparatus, which uses OFDM as a radio transmission method to simultaneously communicate with a maximum of M (M is a natural number) mobile stations in one OFDM symbol time, to execute:
frequency channel allocating processing for allocating an i-th (i = 1, 2, ···, M) frequency channel to be used when transmitting a pilot signal to an i-th mobile station;
frequency channel signal transmission processing for transmitting an i-th frequency channel signal indicating the i-th frequency channel to the i-th mobile station;
signal transformation processing for deleting a guard interval from a received signal obtained by receiving an i-th transmission signal transmitted by the i-th mobile station in response to the i-th frequency channel signal, and Fourier transforming the signal from which the guard interval has been deleted to generate a signal transformed on a frequency axis as a transformed signal;
mobile station signal separating processing for extracting subcarrier components corresponding to the i-th frequency channel from the transformed signal to thereby generate an i-th mobile station separated signal consisting only of the signal transmitted by the i-th mobile station; and
delay profile generating processing for generating an i-th delay profile by being provided with an input of the i-th mobile station separated signal.

21. A timing estimation method for estimating a start timing of signal processing performed by a base station apparatus, which uses OFDM as a radio transmission method to simultaneously communicate with a maximum of M (M is a natural number) mobile stations in one OFDM symbol time, by receiving an i-th (i = 1,2, ···,M) transmission signal transmitted from an i-th mobile station, the timing estimation method comprising the steps of:
allocating an i-th frequency channel to be used when transmitting a pilot signal to the i-th mobile station;
transmitting an i-th frequency channel signal representing the i-th frequency channel to the i-th mobile station;
generating a signal transformed on a frequency axis as a transformed signal by deleting a guard interval from a received signal obtained by receiving an i-th transmission signal transmitted by the i-th mobile station in response to the i-th frequency channel signal and Fourier transforming the signal from which the guard interval has been deleted;
generating an i-th mobile station separated signal consisting only of the signal transmitted by the i-th mobile station by extracting subcarrier components corresponding to the i-th frequency channel from the transformed signal; and
generating an i-th delay profile by being provided with an input of the i-th mobile station separated signal.
